Europäisches Patentamt

(19) European Patent Office
Office européen des brevets

(11) Publication number: 0 101 096
B1

(12) EUROPEAN PATENT SPECIFICATION

(45) Date of publication of patent specification: 11.06.86   (51) Int. Cl.⁴: E 21 B 10/46

(21) Application number: 83200741.3

(22) Date of filing: 13.08.79

(60) Publication number of the earlier application in accordance with Art. 76 EPC: 0 009 315

(54) Core and oil-well drill bits.

(30) Priority: 18.08.78 ZA 784716
19.12.78 ZA 787087
27.12.78 ZA 787291
21.02.79 ZA 790814

(43) Date of publication of application:
22.02.84 Bulletin 84/08

(45) Publication of the grant of the patent:
11.06.86 Bulletin 86/24

(84) Designated Contracting States:
AT BE CH DE FR GB IT NL SE

(56) References cited:
AU-B-6 093 169
DE-A-2 753 846
DE-A-2 803 735
US-A-3 563 325
US-A-3 702 573
US-A-4 057 294

(73) Proprietor: DE BEERS INDUSTRIAL DIAMOND DIVISION (PROPRIETARY) LIMITED
8th Floor 45 Main Street
Johannesburg Transvaal (ZA)

(72) Inventor: Campbell, Nicoll Archibald Drummond
54 Kerry Road Parkview
Johannesburg Transvaal (ZA)
Inventor: Dyer, Henry Brooke
P.O. Box 67276
Bryanston 2021 (ZA)
Inventor: Dietrich, Rainer
101, 6th Street Linden
Johannesburg Transvaal (ZA)
Inventor: Phaal, Cornelius
34, Rutland Avenue Craighall Park
Johannesburg Transvaal (ZA)
Inventor: Reid, Douglas James
Crabtree Cottage Ballycar
Newmarket-on-Fergus County Clare (IE)

(74) Representative: Jones, Alan John et al
CARPMAELS & RANSFORD 43 Bloomsbury Square
London, WC1A 2RA (GB)

Courier Press, Leamington Spa, England.

# Description

This invention relates to core and oil-well drill bits.

U.S. Patent Specification No. 3,693,736 (Gardner) relates to a carbide cutter insert for a rock bit body strengthened against breakage. Removal and replacement of the insert are facilitated by encasing the insert in a protective jacket of material substantially softer than the carbide. The composite element is then firmly pressed and/or bonded in an orifice in the cutting face of the bit body. The jacket and the cutter insert may have oppositely tapering, generally conical outer walls. The element can be readily removed simply by cutting away the softer jacket by a suitable machine tool operation without damaging the body bore.

U.S. Patent Specification No. 3,702,573 (Nemeth) relates to a cermet product and a method and apparatus for the manufacture thereof in which carbonaceous material is placed in a cell in the presence of metal and converted to diamond form. The converted charge upon removal from the apparatus is shaped and mounted on a tool holder and it is then adapted for use as a turning tool. The invention contemplates conversion of the carbon-metal charge in a shaped cavity, e.g. a triangular shaped cavity, to reduce the amount of shaping required after the charge is removed from the chamber in which it is converted.

The present invention provides a core or oil-well drill bit incorporating a plurality of inserts of abrasive compact, said inserts being of truncated pyramidal, truncated conical, or triangular shape, and tapering from a base to a cutting edge or surface, and said inserts being mounted in corresponding cavities in said drill bit to expose each cutting edge or surface.

Preferably, said inserts are brazed in said cavities, and said compact is a diamond abrasive compact.

The inserts may be made by the method described and claimed in copending European Patent Application No. 79301629.6 (Publication No. 0 009 315). This method includes the step of fragmenting an abrasive compact into a plurality of discrete, non-segmental fragments. The fragments are of non-segmental shape, i.e. they have a shape essentially other than that of a segment of a circle. The fragments are typically truncated pyramidal, truncated conical, or triangular in shape.

The fragments may be used for core or oil-well drill bits. The drill bit will consist of a number of the inserts mounted in a metal matrix.

The compacts are typically fragmented by cutting them with a laser beam where tight tolerances can be achieved.

Another way in which the compacts may be fragmented is to produce a compact bonded to a support, such as a carbide support, the interface between the diamond and support having a plurality of ridges or protrusions of the support defining a desired fracture pattern and projecting into the compact. The support is then removed, e.g. by grinding, leaving a compact having a pattern of zones of weakness defined by the ridges or protrusions. The compact can be fractured along the zones of weakness to produce the fragments.

The compact may be any suitable compact known in the art, particularly a diamond or a cubic boron nitride compact. Such compacts, as is well known in the art, consist essentially of a polycrystalline mass of abrasive particles, generally present in an amount of at least 70 percent, preferably 80 to 90 percent, by volume of the compact, bonded into a hard conglomerate.

Abrasive compacts, particularly diamond and cubic boron nitride compacts, may be self bonded, i.e. individual particles of the compact may be fused and bonded together without the aid of a metal or like bonding matrix. Alternatively, stronger and more durable compacts are produced when there is a suitable bonding matrix present.

In the case of cubic boron nitride compacts, i.e. compacts in which the abrasive particle is predominantly cubic boron nitride, the bonding matrix, when provided, preferably contains a catalyst (also known as a solvent) for cubic boron nitride growth such as aluminium or an alloy of aluminium with nickel, cobalt, iron, manganese or chromium. Such catalysts tend to be soft and to minimise smearing of the catalyst during any use of the compact it is preferred that the matrix also includes a ceramic such as silicon nitride which is capable of reacting with the catalyst to produce a hard material.

In the case of diamond compacts, i.e. compacts in which the abrasive particle is predominantly diamond, the bonding matrix, when provided, preferably contains a solvent for diamond growth. Suitable solvents are metals of Group VIII of the Periodic Table such as cobalt, nickel or iron or an alloy containing such a metal.

For diamond and cubic boron nitride compacts the presence of a solvent or catalyst for the particular abrasive being used in the compact is desirable because then under the conditions necessary for the manufacture of such compacts intergrowth between the particles occurs. As is known in the art, diamond and cubic boron nitride compacts are generally manufactured under conditions of temperature and pressure at which the abrasive particle is crystallographically stable.

The inserts may be provided with a backing such as a cemented carbide backing in the manner described and illustrated in British Patent Specifications Nos. 1,349,385, 1,407,393 and 1,489,130.

The cemented carbide is usually a cemented tungsten carbide, cemented titanium carbide or cemented tantalum carbide. As is known in the art, cemented carbides consist of a mass of carbide particles bonded into a coherent, hard mass by means of a metal bonding medium. The metal bonding medium is usually provided in an amount of 6 to 35 percent by weight of the carbide and is usually cobalt, nickel or iron.

Embodiments of the present invention will now be described, by way of example, with reference to the accompanying drawings, in which:—

Figure 1 illustrates, in side elevation, a method of fragmenting a compact;

Figures 2 and 3 illustrate typical inserts for use in drill bits of the present invention;

Figure 4 is a schematic side view of a drill bit according to the present invention; and

Figure 5 illustrates, in plan, a method of fragmenting an abrasive compact to produce, inter alia, triangular fragments.

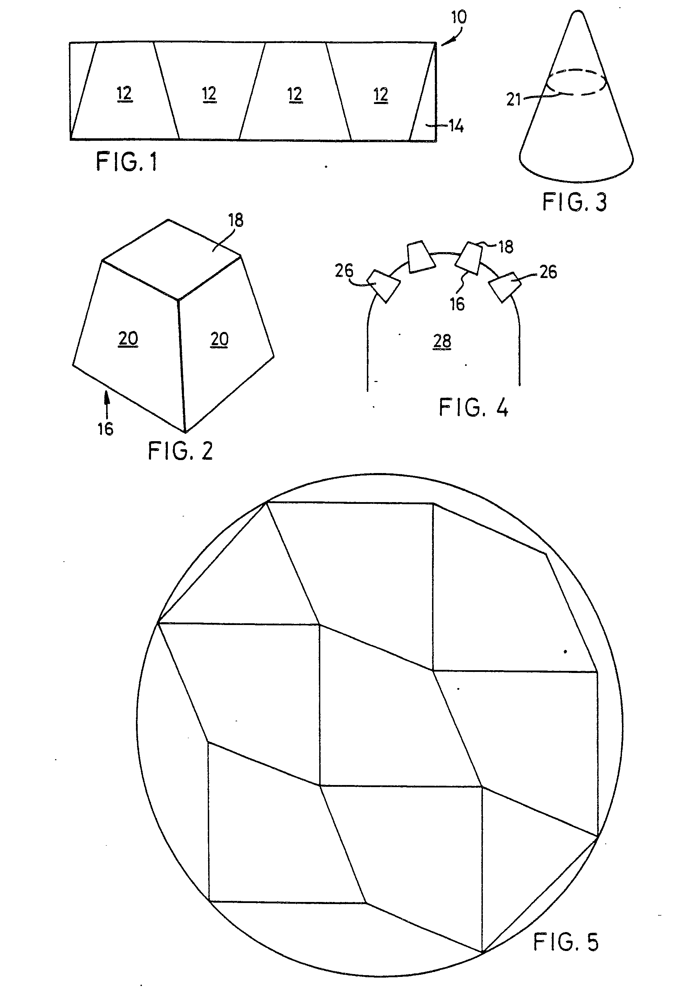

Referring to Figure 1, the truncated pyramidal inserts may be made by suitably cutting a disc-shaped compact into a plurality of such inserts. A disc-shaped compact 10 is made in the conventional manner. This disc is then cut in a series of intersecting cuts one direction of which is illustrated by Figure 1 to produce a number of inserts 12. There will inevitably be a certain amount of off-cut 14. The cutting is preferably achieved by means of a laser beam.

Typical inserts produced by the method are illustrated by Figures 2 and 3 of the accompanying drawings. Referring to Figure 2, it can be seen that the insert has a bottom 16 and a top 18, constituting a cutting surface, which is smaller in cross-sectional area than the bottom 16. The top 18 and bottom 16 are joined by sloping surfaces 20. Figure 3 illustrates an insert of conical shape. The insert may be truncated along dotted line 21 to produce an insert of truncated conical shape.

A number of inserts may be cut from a disc-shaped or circular compact illustrated by Figure 5. It will be noted from Figure 5 that seven bodies of quadrilateral shape can be produced, leaving two useful triangular shaped bodies and little wastage. Fragments of the Figure 5 configuration are typically cut from large circular compacts, i.e. compacts having a diameter of about 12 mm or larger, e.g. 12.7 mm in diameter.

A drill bit 28 incorporating a plurality of inserts 26 is illustrated by Figure 4. The tapered configuration minimises pull-out of the inserts. The matrix of the drill bit may be machined in such a way that the inserts may be slotted into cavities machined in the bit and thereafter brazed, if necessary.

## Claims

1. A core or oil-well drill bit incorporating a plurality of inserts of abrasive compact, said inserts being of truncated pyramidal, truncated conical, or triangular shape, and tapering from a base to a cutting edge or surface, and said inserts being mounted in corresponding cavities in said drill bit to expose each cutting edge or surface.

2. A drill bit according to Claim 1 wherein said inserts are brazed in said cavities.

3. A drill bit according to Claim 1 or Claim 2 wherein said compact is a diamond abrasive compact.

## Patentansprüche

1. Kern- oder Tieflochbohrkopf mit mehreren Einsätzen aus Schliefmittel-Compact, wobei die Einsätze die Form eines Pyramidenstumpfes, eines Kegelstumpfes oder Dreiecks aufweisen und sich von einer Basis zu einer Schneidkante oder -fläche verjüngen und wobei die Einsätze in entsprechenden Hohlräumen in dem Bohrkopf montiert sind, so daß jede Schneidkante oder -fläche freiliegt.

2. Bohrkopf nach Anspruch 1, bei dem die Einsätze in den Hohlräumen verlötet sind.

3. Bohrkopf nach Anspruch 1 oder 2, bei dem der Compact ein Diamant-Schleifmittel-Compact ist.

## Revendications

1. Un trépan pour carottage et forage pétrolier comportant une pluralité d'inserts de compact abrasif, lesdits inserts ayant la forme de tronc de pyramide, de tronc de cône ou de triangle et s'amincissant de la base au bord ou surface de coupe et lesdits inserts étant montés dans des cavités correspondantes dudit trépan de façon à exposer chaque bord ou surface de coupe.

2. Un trépan selon la revendication 1 dans lequel lesdits inserts sont brasés dans lesdites cavités.

3. Un trépan selon la revendication 1 ou 2 dans lequel ledit compact est un compact abrasif de diamant.

FIG. 1

FIG. 3

FIG. 2

FIG. 4

FIG. 5